# EUROPEAN PATENT APPLICATION

(11) **EP 1 296 079 A1**
(43) Date of publication of application: **26.03.2003**
(21) Application number: 02078489.8
(22) Date of filing: 23.08.2002
(51) Int. Cl.: F16D 3/224

(54) **Constant velocity joint**

(30) Priority: 20.09.2001 US 960092
(71) Applicant: Delphi Technologies, Inc., Troy, MI 48007 (US)
(72) Inventor: Thomas, Steven M., Saginaw, MI 48609 (US)
(74) Representative: Denton, Michael John

(57) **Abstract**

A constant velocity joint (10) has an outer race (12), cage (30), and inner race (20) where the opening (38) of the cage is sized to be equal to or greater than the minimum projected height (46) of the inner race to allow the inner race to transitionally slide through the opening and rotate within the cage to be installed therein. The lobes (26) of the inner race are thicker than the length of the windows (32) of the cage. All the windows (32) have the same length.

## Description

### BACKGROUND OF THE INVENTION

### 1. Technical Field

This invention relates to constant velocity joints.

### 2. Related Art

Constant velocity joints, commonly referred to as CV joints, have long been known to eliminate the problems of sinusoidal variation of speed between the driving shaft and the driven shaft when an angle exists between the two shafts. This quality is extremely desirable in half-shafts for front wheel drive motor vehicles where a relatively high angle may exist between the drive half-shaft and the driven shaft. Because the driven shaft is connected to suspended steerable wheels, the angle may also vary.

Rzeppa style constant velocity joints as well as other types of CV joints use balls interposed between an inner race and outer race to pass torque from one race to the other race. The cage has windows sized to retain the balls.

Auctor style cages with concentric spherical inner diameters and outer diameters have been commonplace. These types of cages have an opening with a diameter that is less that the outer diameter of the inner race. The advantage of this type of the inner race and cage is that the inner race, once assembled within the cage, is then retained within the cage to entrap the balls and prevent them from falling out. However, the assembly of the inner race into the cage is difficult and poses some limits as to the strength of the cage.

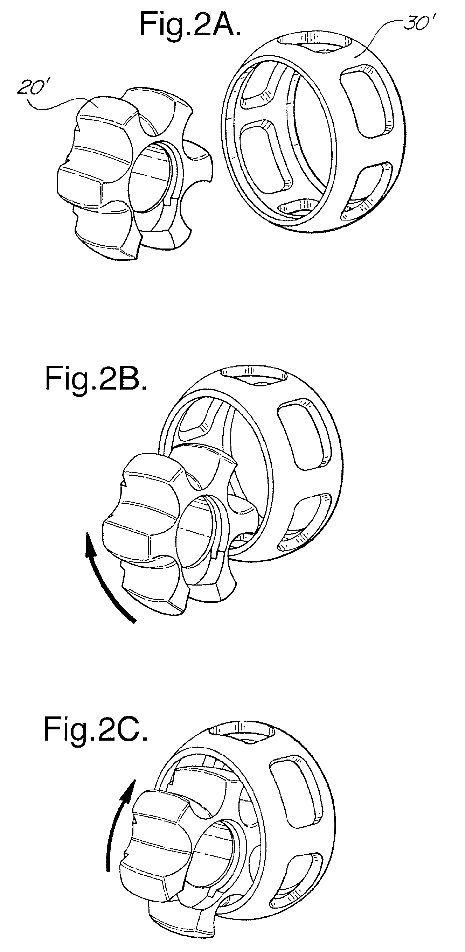

As illustrated in Figure 2(a), the installation and assembly of the inner race 20' requires that the inner race initially has its longitudinal axis orthogonal to and spaced from the longitudinal axis of the cage 30'. The inner race is then inserted into the cage with the rim of the cage intruding into one of the ball tracks in the inner race as illustrated in Figure 2(b). The inner race is then rolled further into the cage as further illustrated in figure 2(c).

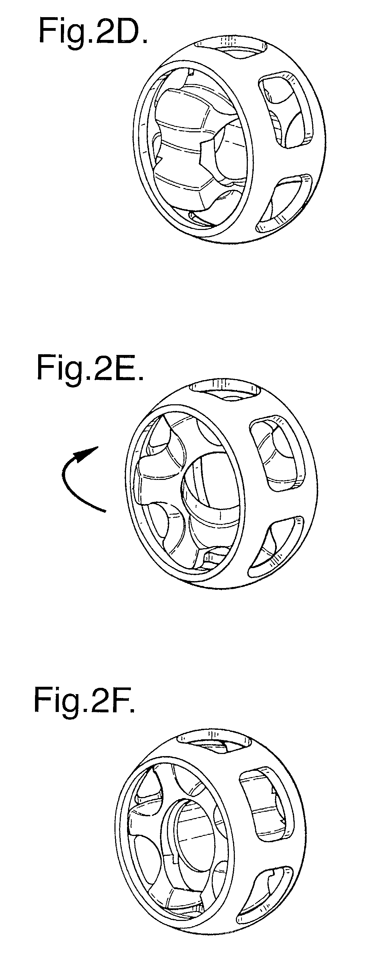

During the rolling of the inner race into the cage, it is necessary to extend one of the lobes of the inner race into one of the windows in the cage such that the opposite side of the inner race can clear the rim of the opening of the cage to be fully inserted into the cage. Thereafter, the inner race is raised to remove the lobe from the window such that both longitudinal axes intersect as illustrated in Figure 2(d). In this position, the inner race is then free to rotate 90° as shown in Figure 2(e) to align the two longitudinal axes to complete the installation of the inner race within the cage as shown in Figure 2(f).

The window that receives the lobe must be lengthened to accommodate the thickness of the lobe. As such, the lengthening of the window undesirably removes structural support for the cage. This accommodation becomes even more undesirable for high angle joints. In high angle joints capable of joint angles greater than or equal to 50°, the thickness of the inner race and its lobes need to be increased in order to retain the ball throughout the full angular range of motion. The increase in thickness of the inner race and its lobes means that the window needs to be correspondingly increased in length. Furthermore, chamfering of the lobes at its ends should be minimized since chamfering removes materials from important bearing surfaces.

As one can easily determine, the present three dimensional puzzle of fitting the inner race into the cage poses difficulty and expense for high volume automatic assembly. For high angle joints, it becomes impractical to lengthen the cage window to accommodate the required thicker lobes during such an installation process and impractical to chamfer the lobes.

### SUMMARY OF THE INVENTION

In accordance with one aspect of the invention, a constant velocity joint has an inner race, outer race, and a cage having windows for receiving a plurality of balls interposed between the inner race and outer race. All of the windows in the cage have equal length and are sized to be less than the thickness of each lobe of the inner race. The cage has an opening with a diameter that is smaller than the outer diameter of the inner race across diametrically opposed lobes but greater than or equal to the height of the inner race measured between two pair of opposed lobes. In one embodiment, the constant velocity joint is a six-ball joint with the inner race having six lobes and the cage having six equally sized windows. Preferably, the ball center radial distance from the inner opening diameter is less than approximately 3/10 the thickness of the cage wall. The ball center diameter for the six balls is also preferably less than 3.3 times as great as the individual ball diameter. The ratio of the offset from the center of plane of the balls with respect to the ball center radius is desirably greater than 0.121. The constant velocity joint is desirably a high angle joint with angle capabilities greater or equal to 50°.

In accordance with another aspect of the invention, a constant velocity joint is a six-ball joint with the inner race having six lobes and the cage having six windows. The opening diameter of the cage is smaller than the outer diameter of the inner race across diametrically opposed lobes but greater than or equal to the height of the inner race measured between two pair of opposed lobes.

In accordance with another aspect of the invention, a method of assembly of an inner race to a ball cage for a constant velocity joint includes the step of positioning an inner race such that its longitudinal axis is transverse to and intersecting a longitudinal axis of the ball cage. In a subsequent step, the lobes of the inner race are positioned such that two opposing lobes define an outer diameter of the inner race that is larger than the opening diameter of the ball cage with the outer diameter of the inner race being canted with respect to the longitudinal axis of the cage. In this position, the inner race height with respect to a direction transverse to the longitudinal axis of the cage between two pairs of opposing lobes is equal to or less than the opening diameter of the cage.

In a subsequent step, the inner race is transitionally moved relative to the cage until the two pairs of lobes pass through the opening of the cage and the longitudinal axis of the inner race intersects a ball center plane of the cage. The inner race is then rotated with respect to the cage to align the longitudinal axis of the inner race with the longitudinal axis of the ball cage to align the diameter of the inner race parallel to the opening diameter. Preferably, the method includes use of a six ball constant velocity joint with the inner race having six lobes and the cage having six windows for seating six balls.

### THE DRAWINGS

Reference now is made to the accompanying drawings in which:
Figure 1 is a segmented side elevational view of a constant velocity joint in accordance with one embodiment of the invention;
Figure 2 is sequence of prior art steps showing how a conventional inner race is assembled within a conventional cage;
Figure 3 is cross-sectional view taken along lines 3-3 as shown in Figure 1;
Figure 4 is side elevational view of the inner race shown in Figure 1;
Figure 5 is a side elevational view of the cage shown in Figure 1;
Figure 6 is a plan view of the inner race shown in position to be moved into the cage shown in Figure 5;
Figure 7 is a partially segmented view showing the inner race transitionally moved to a partially inserted position with respect to the cage;
Figure 8 is a view similar to Figure 7 with the transitional movement of the inner race completed to fully insert the inner race with respect to the cage; and
Figure 9 is a view similar to Figure 8 illustrating how the outer diameter of the inner race when rotated into the ball center plane from the position shown in Figure 8 can retain the inner race within the cage.

### DETAILED DESCRIPTION

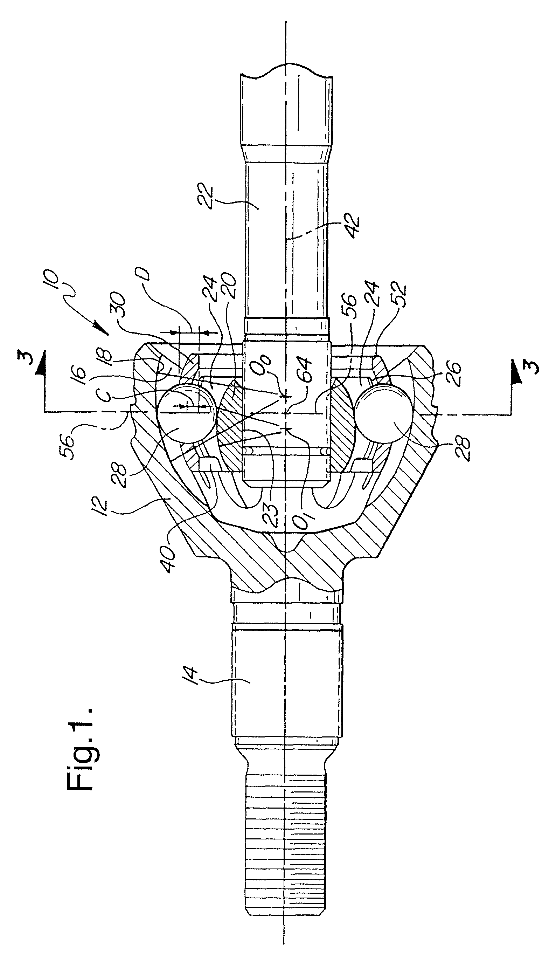

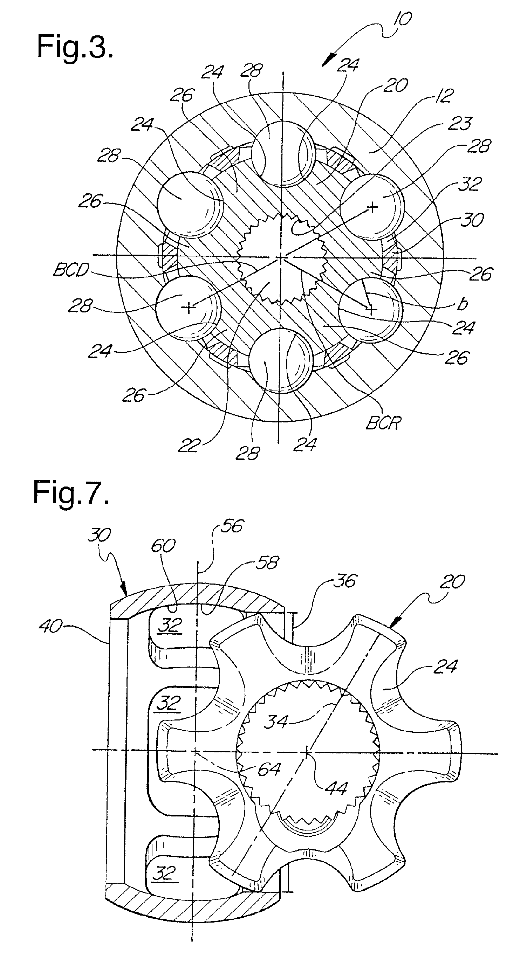

Referring now to Figure 1, a Rzeppa style constant velocity joint 10 is shown with an outer race 12 connected to a shaft section 14 and having six ball tracks 16 on its inner face 18. An inner race 20 is splined to a second shaft section 22 as shown clearly in Figure 3 through a central splined opening 23 and has six ball tracks 24 on its outer face 25. Six lobes 26 are formed between the tracks 24. The ball tracks 16 and 24 hold six balls 28 which are disposed in six equally sized windows 32 of a cage 30.

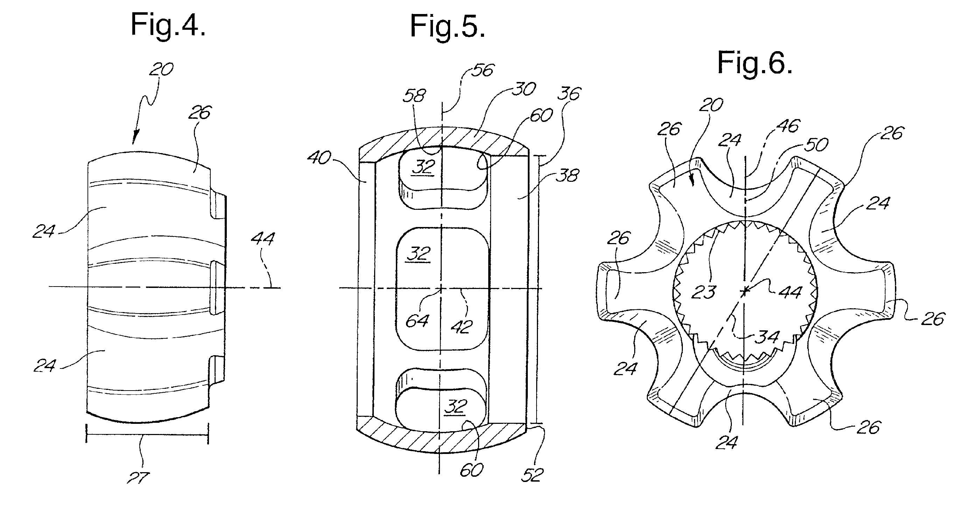

As shown in Figures 4 and 5, the thickness 27 of the lobes 26 may be greater that the cross-sectional length of any window 32. In other words, there is no requirement that the thickness of lobes 26 and the length of the windows need to accommodate or be dependent upon the dimension of the other.

The outer diameter as indicated by numeral 34 in Figure 6 is greater than the diameter 36 of opening 38 in cage 30 in order to provide that the inner race 20 when fully installed within cage 30 is retained in the cage and unable to slip axially out through opening 38 or open back side 40. The opening 38 has no steps and has the same diameter until it contacts inner curved surface 60 of cage 30 in proximity to windows 32.

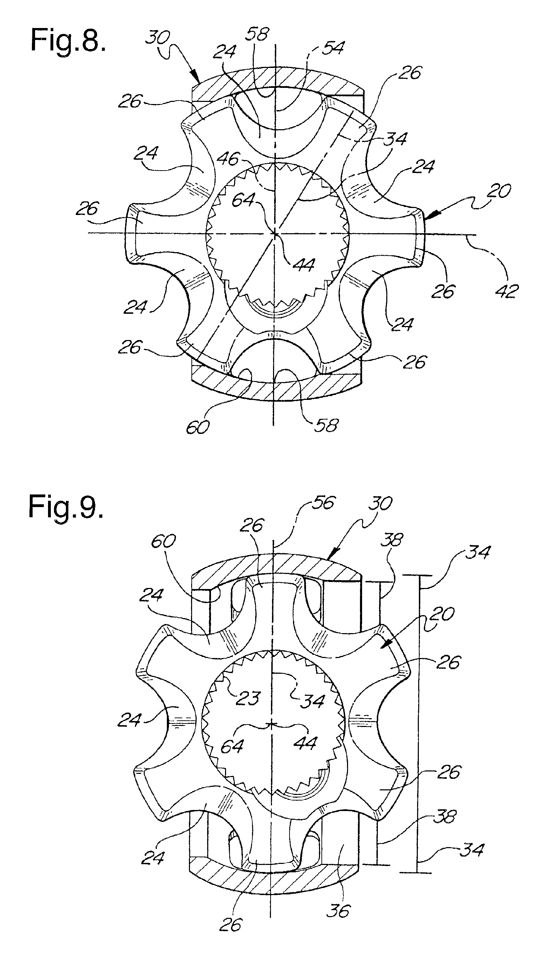

The cage is positioned in Figure 5 relative to the inner race 30 shown in Figure 6 such that the longitudinal axis 42 is transverse and intersects the longitudinal axis 44 of the inner race 20. The opening 38 has its diameter 36 sized to be at least as great as the minimum projected height 46 of the inner race when the inner race 20 is rotated to have its outer diameter 34 canted with respect to the longitudinal axis 42 of cage 30. The minimum projected height 46 is obtained when the projection is evenly positioned between two lobes 48 of the inner race through the center 50 of the track 24. The inner race can then be transitionally moved into opening 38. As shown in Figure 7, the minimum projected height 46 when the two axis 42 and 44 are transverse to each other and the diameter 34 is angled as shown in Figure 6 allows the inner race to pass through the opening 38 without any needed rotation, i.e. rolling, of the inner race. As shown in Figure 7, the edge 52, i.e. rim, of opening 38 need not be received within the track 24 as previously needed with the prior art devices.

As shown in Figure 8, the straight transitional movement continues until a position is achieved where the longitudinal axis 44 of the inner race intersects the ball center plane 56. The ball center plane 56 is transverse to the longitudinal axis 42 and contains the apexes 58 of interior surface 60 of cage 30 as well as the center of the balls as shown in Figure 1. For Auctor type cages where the inner surface 60 defines a spherical undercut, the longitudinal axis 44 also intersects the spherical center 64 of the inner cage surface 60.

From the position shown in Figure 8, the inner race is then free to rotate about a vertical axis 90° such that its longitudinal axis 44 becomes aligned with axis 42 as shown in Figure 1. In this position the outer diameter 34 is rotated into the ball center plane. When in this position, the diameter 34 prevents the inner race 20 from transitionally moving out of the cage because it is greater than the opening diameter 36 of cage 30. This relative size of outer diameter 34 to opening diameter 38 is further illustrated in Figure 9 where the inner race is rotated from its position shown in Figure 8 to place the diameter 34 into the ball center plane 56.

This construction provides that the ratio C/D where C is the distance on the inner rim 52 of opening 38 to the ball center position and D is thickness of the cage, is less than 0.3 as shown in Figure 1.

Referring now to Figure 3, this construction also provides that the ratio of BCD/b, i.e. the Ball Center Diameter (BCD)/ball diameter (b), is less than 3.3. This provides for larger balls more compactly spaced.

Furthermore, this construction provides that the ratio of the offset/BCR, i.e. ½ distance O_{I}O_{O}/Ball Center Radius, is greater than 0.121. O_{I} is offset of the center of the inner track radius from the ball center plane 56 and O_{O} is the offset of the outer track radius curvature from the ball center plane 56. Again, this enlarged ratio over the prior art denotes the compactness of the ball centers relative to the other structures to provide a high angle joint with increased durability. This construction provides for an increase in joint angle of 4° to a joint angle capacity of 50° over the conventional constructions.

Variations and modifications are possible without departing from the scope and spirit of the present invention as defined by the appended claims.

## Claims

1. A six ball constant velocity joint comprising:
an inner race (20) having six circumferentially spaced lobes (26) defining ball-accommodating tracks (24) between said lobes (26), said inner race (20) having a first outer diameter dimension (34) measured between opposing ones of said lobes (26) and a second relatively smaller, outer diameter dimension (46) measured between opposing projection lines of opposing ones of said tracks (24) extending across said tracks (24) between the outermost extent of the lobes (26) adjacent each of said tracks (24);
an outer race (12) disposed about said inner race (20);
a cage (30) disposed between said inner race (20) and said outer race (12) and having six circumferentially spaced windows (32);
a set of six torque-transmitting balls (28) disposed between said inner race (20) and said outer race (12) and accommodated in said windows (32) of said cage (30); and
wherein said cage (30) has an opening (38) at one end thereof having an inner diameter dimension (36) relatively less than the first outer diameter dimension (34) of said inner race (20), but equal to or relatively greater than the second outer diameter dimension (46) of said inner race (20).

2. The six ball constant velocity joint of claim 1 wherein said windows (32) of said cage (30) have uniform equal length in the circumferential direction of said cage (30) and said lobes (26) have equal axial thickness greater than the length of said windows (32).

3. A constant velocity joint (10) as defined in claim 3 further comprising:
the ball center radial distance (C) from the inner opening is less than approximately 3/10 the thickness (D) of the cage wall.

4. A constant velocity joint (10) as defined in claim 2 further comprising:
the ball center diameter (BCD) for the six balls being less than 3.3. times as great as the individual ball diameter (b).

5. A constant velocity joint (10) as defined in claim 4 further comprising:
said ratio of the offset of the constant velocity joint with respect to the ball center radius being greater than 0.121.

6. A constant velocity joint (10) as defined in claim 2 further comprising:
said joint having a high angle capability to be greater or equal to 50°.
